# EUROPÄISCHE PATENTANMELDUNG

(11) **EP 1 752 358 A1**
(43) Veröffentlichungstag der Anmeldung: **14.02.2007**
(21) Anmeldenummer: 05107331.0
(22) Anmeldetag: 10.08.2005
(51) Int. Cl.: B62D 5/065

(54) **Elektro-hydraulische Servolenkung und Verfahren zur Steuerung ihrer Pumpendrehzahl**

(71) Anmelder: Ford Global Technologies, LLC, Dearborn, MI 48126 (US)
(72) Erfinder: Figura, Michael Georg, 41542 Dormagen (DE); Vliem, Edwin, 5521 SN Eersel (NL)
(74) Vertreter: Drömer, Hans-Carsten

(57) **Zusammenfassung**

Die Erfindung betrifft ein Verfahren zur Steuerung einer Pumpendrehzahl einer elektro-hydraulisch unterstützten Servolenkung eines Kraftfahrzeuges. Die Erfindung betrifft aber auch eine Servolenkung mit einer Pumpe, deren Pumpenfluß bzw. - drehzahl gesteuert wird. Der Pumpenfluß wird durch eine Kombination unterschiedlicher Lenksignale gesteuert. Hierbei wird ein Lenkratensignal und ein Leistungs- bzw. Strombedarf als unterschiedliche Lenksignale aufgenommen, so daß die Pumpendrehzahl zum einen über das Lenkratensignal oder zum anderen über den Strombedarf gesteuert wird.

## Beschreibung

Die Erfindung betrifft ein Verfahren zur Steuerung einer Pumpendrehzahl einer elektro-hydraulisch unterstützten Servolenkung eines Kraftfahrzeuges. Die Erfindung betrifft aber auch eine Servolenkung mit einer Pumpe, deren Pumpenfluß bzw. - drehzahl gesteuert wird.

Beispielsweise sind derzeit drei unterschiedliche Verfahren einer Hilfskraftlenkung (Servolenkung) bekannt. Ein erstes bekanntes Verfahren ist die konventionelle hydraulische Hilfskraftlenkung. Hierbei treibt ein Verbrennungsmotor über einen Keilrippenriemen eine Hydraulikpumpe an, die linear zur Motordrehzahl einen steigenden Fluß zur Verfügung stellt. Da bei hohen Motordrehzahlen ein viel zu hoher Fluß bereitgestellt werden würde, wird der überflüssige Fluß über ein Flußbegrenzungsventil (Flow Control Valve) abgesteuert, wodurch Wärme entsteht.

Ein zweites bekanntes Verfahren ist die elektro-hydraulische Hilfskraftlenkung. Ein Elektromotor treibt eine Hydraulikpumpe (Motor-Pumpen-Einheit) an. In Abhängigkeit von verschiedenen Parametern (z.B. Lenkrate, Fahrgeschwindigkeit, Öltemperatur) wird die Pumpendrehzahl über eine Matrix, die in einer geeigneten Software hinterlegt ist (Steering Map) gesteuert.

Ein drittes bekanntes Verfahren ist die elektrische Hilfskraftlenkung. Ein Elektromotor unterstützt den Fahrer über ein Getriebe direkt während der Lenkbewegung. Auch hier werden in einer geeigneten Software Werte hinterlegt, die abhängig vom Betriebszustand angefahren werden.

Die beiden letztgenannten Verfahren sind vom Verbrennungsmotor unabhängig, um Energie, insbesondere Kraftstoff zu sparen. Weiter ist das zuerst genannte Verfahren bei Fahrzeugen, die keinen Verbrennungsmotor aufweisen bzw. einen Verbrennungsmotor aufweisen, der nicht permanent arbeitet (z. B. Hybridfahrzeuge, Elektrofahrzeuge) nicht anwendbar.

Zur Lenkkraftunterstützung weisen derzeitige Kraftfahrzeuge üblicherweise eine elektro-hydraulisch unterstützte Servolenkung auf, die im Folgenden einfach als Servolenkung bezeichnet wird. Zur Parametrisierung werden externe und interne Signale ausgewertet: Lenkrate (also die Lenkgeschwindigkeit in Grad pro Sekunde), Lenkwinkel (in Grad), Fahrzeuggeschwindigkeit und Servoöltemperatur (Temperaturkompensation).

Der Servolenkung ist eine Pumpe zugeordnet, welche mittels der hydraulischen Flüssigkeit (Servoöl) eine Hilfskraft erzeugt. Bei einer hohen Drehzahl der Pumpe wird ein hoher Fluß und somit eine hohe Hilfskraft erzeugt. Bei hohen Lenkgeschwindigkeiten (Lenkraten) ist demnach eine hohe Pumpendrehzahl und bei niedrigen Lenkgeschwindigkeiten eine niedrige Pumpendrehzahl erforderlich. Der Druck stellt sich dabei abhängig vom Lastzustand und der Auslegung des Lenkventils (im Lenkgetriebe) selbstständig ein, ist also keine Steuergröße. Abhängig vom Druck stellt sich dann ein Strombedarf am Elektromotor ein (weil die Spannung ja konstant bleibt, aber mehr Leistung benötigt wird) der meßbar ist.

Zur Steuerung der Pumpendrehzahl sind derzeit zwei unterschiedliche Verfahren bekannt, bei denen die Pumpendrehzahl unter anderem über die Fahrzeuggeschwindigkeit jeweils über ein Lenksignal gesteuert wird. Bei dem einen bekannten Verfahren wird das Lenksignal über einen Lenkratensensor bestimmt, so daß ein Lenkratensignal aufgenommen wird, wodurch die Pumpendrehzahl bei einer hohen Lenkwinkelrate entsprechend hoch ist. Bei dem anderen bekannten Verfahren wird der Pumpenleistungsbedarf, entweder direkt oder indirekt über den Strombedarf aufgenommen, so daß ein gemessener Leistungs- oder Strombedarf eine entsprechende Pumpendrehzahl steuert.

Bei einer Geradeausfahrt des Kraftfahrzeugs befindet sich die Pumpe im Leerlauf, so daß keine oder eine relativ geringe Hilfskraft erzeugt wird. Bei einer Lenkbewegung des Fahrers an dem Lenkrad (Lenkwinkel) wird die Pumpe mit einer entsprechend höheren Pumpendrehzahl betrieben.

Bei der Steuerung der Pumpendrehzahl mittels des Lenkratensignals bekommt die Pumpe das Lenkratensignal sehr schnell übermittelt, so daß die Pumpe entsprechend schnell reagieren kann. Dieses bekannte Verfahren zur Steuerung der Pumpendrehzahl ist demnach ein hoch-dynamisches Verfahren. Als ein Nachteil der Steuerung der Pumpendrehzahl mittels des Lenkratensignals ist anzusehen, daß die Pumpe das übermittelte Lenkratensignal bei quasi statischen Manövern wie z. B. einer Kreisbahnfahrt mit einem konstanten Radius möglicherweise inkorrekt interpretiert, wobei der Lenkwinkel konstant bleibt und damit keine Lenkrate erzeugt wobei die Steuerung das dahingehend übersetzt, daß die Pumpendrehzahl herabgesetzt werden soll. Damit wird eine, bezogen auf den erforderlichen Pumpenfluß, reduzierte Pumpendrehzahl (Herunterlaufen) zur Verfügung gestellt. Diese falsche Interpretation des Lenkratensignals bemerkt der Fahrer, indem eine plötzliche Steigerung der Lenkkraft an dem Lenkrad auftritt, wenn die Pumpendrehzahl und damit der Pumpenfluß abfallen.

Das Verfahren zur Steuerung der Pumpendrehzahl mittels der Pumpenleistungsaufnahme bzw. mittels des Strombedarfs ist ein langsames und indirektes Verfahren, bei dem Lenkeingaben gemessen werden. Die tatsächliche Lenkeingabe ist nämlich ein veränderter Lenkwinkel am Lenkrad, der eine bestimmte Lenkunterstützung erfordert, was im Lenksystem zu einem veränderten Öldruck übersetzt wird, was sich dann erst in eine Pumpenleistungs- bzw. Strombedarfsänderung bemerkbar macht. Bei quasi statischen Manövern hält die Pumpe allerdings ihre Pumpendrehzahl, so daß der Fahrer keinen Unterschied in der aufzubringenden Lenkkraft bemerkt. Als ein Nachteil bei dem Verfahren zur Steuerung der Pumpendrehzahl mittels der Leistungsaufnahme bzw. mittels des Strombedarfs ist aber anzusehen, daß der Fahrer bei hochdynamischen Manövern, wie beispielsweise einem Spurwechsel, eine Arretierung (catch-up) bemerkt, weil die Pumpe ihre Drehzahl nicht so schnell zu einer höheren Pumpendrehzahl (Hochlaufen) hin verändert wie erforderlich, da diese den aktuellen Leistungs- bzw. Strombedarf relativ spät detektiert.

Der Erfindung liegt die Aufgabe zugrunde, ein Verfahren und eine Servolenkung der eingangs genannten Art mit einfachen Mitteln dahin gehend zu verbessern, daß dem Fahrer stets die erforderliche Hilfskraft zur Verfügung gestellt wird.

Erfindungsgemäß wird die Aufgabe durch eine Aufnahme eines Lenkratensignals und eines Leistungs- bzw. Strombedarfs als unterschiedliche Lenksignale gelöst, so daß die Pumpendrehzahl kombiniert zum einen über das Lenkratensignal oder zum anderen über den Leistungs- bzw. Strombedarf gesteuert wird bzw. steuerbar ist.

Der Erfindung liegt die Erkenntnis zugrunde, daß das Verfahren zur Steuerung einer Pumpendrehzahl zum einen über das Lenkratensignal und zum anderen über den Leistungs- bzw. Strombedarf jeweils individuelle Vorteile haben. Vorteilhafterweise werden nun mittels des erfindungsgemäßen Verfahrens zur Steuerung der Pumpendrehzahl die Vorteile des jeweiligen Verfahrens in einem Kraftfahrzeug bzw. in einer Servolenkung miteinander verbunden, so daß die Pumpendrehzahl zum einen über das Lenkratensignal, und zum anderen über den Leistungs- bzw. Strombedarf, also über unterschiedliche Lenksignale gesteuert wird. Dies hat den Vorteil, daß die Pumpe schneller auf die Anforderungen des Fahrers reagiert, so daß eine tatsächliche Lenkanstrengung des Fahrers der von ihm erwarteten Lenkanstrengung entspricht. Für den Fall, daß das Lenkratensignal einmal ausfallen sollte, was beispielsweise durch einen fehlerhaften Sensor oder durch Kabelbrüche erfolgen kann, wird die Pumpe aber betriebsbereit gehalten, da diese intern entsprechend auf den Strombedarf reagieren wird. Damit wird stets eine erforderliche Hilfskraft zur Verfügung gestellt. Vorteilhaft werden mittels des erfindungsgemäßen Verfahrens somit die unterschiedlichen Signale miteinander kombiniert, um eine Fehlinterpretation des benötigten Pumpenflusses insbesondere bei einem quasistatischen Manöver (Kreisbahnfahrt) auszuschließen, wobei gleichzeitig sichergestellt ist, daß die erforderliche Hilfskraft (Lenkunterstützung) auch bei schnellen Lenkeingaben schnell genug vorhanden ist.

Günstig im Sinne der Erfindung ist, wenn die Pumpendrehzahl zunächst mittels des Lenkratensignals gesteuert wird, daß die Hilfskraft schnell vorhanden ist und wobei die Pumpendrehzahl bei einem abfallenden oder kleinem Lenkratensignal so lange über den Leistungs- bzw. Strombedarf gesteuert wird, wie der Leistungs- bzw. Strombedarf nicht einer Geradeausfahrt entspricht, so daß die Pumpendrehzahl hoch gehalten wird und die Hilfskraft bestehen bleibt. Der Strombedarf wird gleichzeitig zum Lenkratensignal gemessen bzw. abgegriffen, und steht immer zur Verfügung, wenn das Lenksystem eingeschaltet ist. Für den Fall einer konstanten Kreisbahnfahrt, wobei die Lenkunterstützung während des Einlenkens über das Lenkratensignal erhöht ist, wird die Lenkunterstützung vorteilhaft nicht abfallen, da der Pumpenfluß solange über den Leistungs- bzw. Strombedarf konstant gehalten, wie das Signal nicht einer Geradeausfahrt entspricht. Der Fahrer wird daher während der Kreisbahnfahrt keine unerwartete Änderung in der Hilfskraft bemerken, wie dies bei einem System ohne erfindungsgemäßer Kombination von Lenkwinkelrate und Leistungs- bzw. Strombedarf auftreten kann.

Der gleiche Effekt kann erreicht werden, wenn anstelle des Leistungs- bzw. Strombedarfs ein absolutes Lenkwinkelsignal verwendet wird. Hierbei wird die Pumpendrehzahl zunächst mittels des Lenkratensignals gesteuert, so daß sich eine Hilfskraft aufbaut, wobei die Pumpendrehzahl bei einem abfallenden oder kleinem Lenkratensignal so lange mittels des Lenkwinkelsignals gesteuert wird, wie das Lenkwinkelsignal nicht einer geraden Anstellung (Geradeausfahrt) entspricht, so daß die Pumpendrehzahl hoch gehalten wird und die Hilfskraft bestehen bleibt.

Günstig im Sinne der Erfindung ist hierbei vorgesehen, daß ein Lenkwinkelschwellenwert definiert werden kann, wobei der Lenkwinkelschwellenwert von einer Fahrzeuggeschwindigkeit abhängig sein kann, und eine Geradeausfahrt definiert. Dies indiziert der Pumpe, daß diese beispielsweise nicht zum Leerlauf oder zu einem Betriebszustand bei Geradeausfahrt zurückschalten soll, so lange das Lenksystem einen Lenkwinkel außerhalb eines Geradeanstellungs-Schwellenwertes detektiert.

Das Lenkratensignal stellt quasi das Mastersignal auf der steigenden Rampe, wobei der Strombedarf bzw. das Lenkwinkelsignal an geeignete Stellen (Slave) gehandhabt wird. Bei Ausfall entweder des Lenkratensignals oder des Strombedarfs bzw. des Lenkwinkelsignals, wird lediglich das verbleibende Signal ausgewertet, so daß das verbleibende Signal als Steuersignal benutzt wird, und so daß so ein kompletter Lenkungsausfall vorteilhaft verhindert wird. Sobald die Lenkrate sinkt (fallende Rampe) wird der Strom bzw. das Lenkwinkelsignal zum Master, wobei die Drehzahl über den Strombedarf bzw. das Lenkwinkelsignal gesteuert wird.

Die erfindungsgemäße Kombination der beiden Verfahren zur Steuerung der Pumpendrehzahl, zum einen über die Aufnahme des Lenkratensignals und zum anderen über die Aufnahme des Leistungs- bzw. Strombedarfs, ist in einem dem Kraftfahrzeug zugeordneten Steuerelement leicht realisierbar. Bei Kraftfahrzeugen, die bereits über eine Steuerung der Pumpendrehzahl mittels des Lenkratensignals verfügen, ist lediglich eine Messung des Strombedarfs leicht zu installieren. Bei Kraftfahrzeugen, die bereits über eine Steuerung der Pumpendrehzahl mittels des Strombedarfs verfügen, ist lediglich ein Lenkratensensor leicht einbindbar.

Weiter vorteilhafte Ausgestaltungen der Erfindung sind in den Unteransprüchen und der folgenden Figurenbeschreibung offenbart. Es zeigen :
- Fig. 1: ein Flußdiagramm zur Steuerung eines Pumpenflusses bzw. einer Pumpendrehzahl mittels Lenkwinkelrate und Leistungs- bzw. Strombedarf, und
- Fig. 2: ein Flußdiagramm zur Steuerung eines Pumpenflusses bzw. einer Pumpendrehzahl mittels Lenkwinkelrate und Lenkwinkel.

In den unterschiedlichen Flußdiagrammen sind gleiche Zustände mit gleichen Bezugszeichen versehen, weswegen diese in der Regel auch nur einmal beschrieben werden.

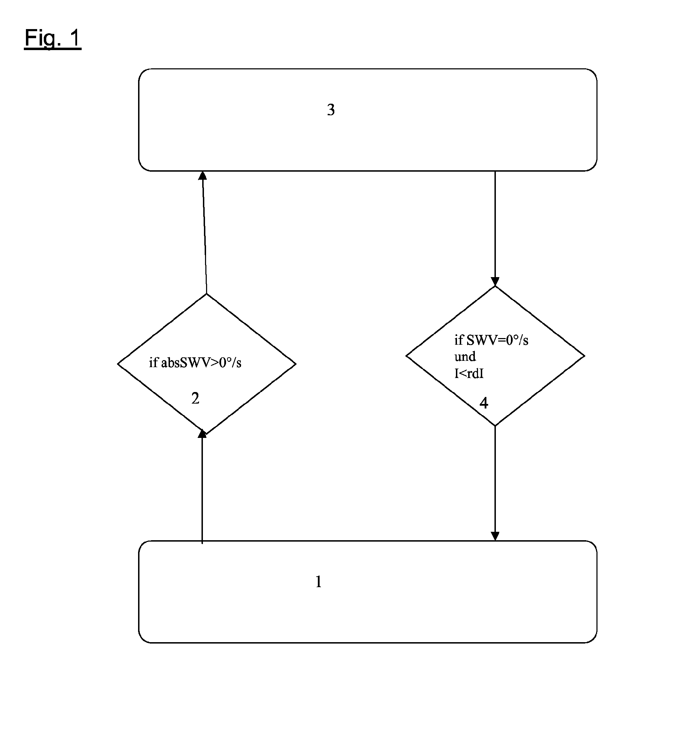

Figur 1 zeigt ein vereinfachtes, beispielhaftes Flußdiagramm zur Steuerung eines Pumpenflusses bzw. einer Pumpendrehzahl einer Pumpe einer Servolenkung über eine Lenkwinkelrate (SWV=Steering Wheel angle velocity) [°/s] und einem Leistungs- bzw. Strombedarf [A].

Ausgehend von einem Basiszustand 1 wird der Pumpenfluß bzw. die Pumpendrehzahl der Servolenkung basierend auf eine speedmap und einer Lenkwinkelrate von 0°/s lediglich abhängig von einer Fahrzeuggeschwindigkeit gesteuert.

Wenn die absolute Lenkwinkelrate größer als 0°/s ist, wird ein Hochlaufsignal (ramp up) erzeugt (Bezugszeichen 2), so daß die Pumpe mit einer höheren Drehzahl betrieben wird, wodurch der Pumpenfluß gesteigert wird. Der höhere Pumpenfluß basiert der Lenkwinkelrate und der Fahrzeuggeschwindigkeit (Bezugszeichen 3).

Wenn die Lenkwinkelrate gleich 0°/s und der aktuelle Leistungs- bzw. Strombedarf (I) kleiner als ein Verringerungsstrom (rdl=ramp down current) ist, wird ein Herunterlaufsignal (ramp down) erzeugt (Bezugszeichen 4), wobei bevorzugt ein Verzögerungs-Abklingfilter (engl.: slow decay filter) verwendet wird, so daß die Pumpe zum Basiszustand 1 zurück gesteuert wird.

Der Verringerungsstrom rdl ist dabei bevorzugt ein Mittelwert eines Geradeausfahrt-Stromes und eines delta Herunterlaufsignals (ramp down delta), wodurch ein Schwellenwert definiert wird um beispielsweise eine Geradeausfahrtposition oder ein unbelastetes Lenksystem zu definieren.

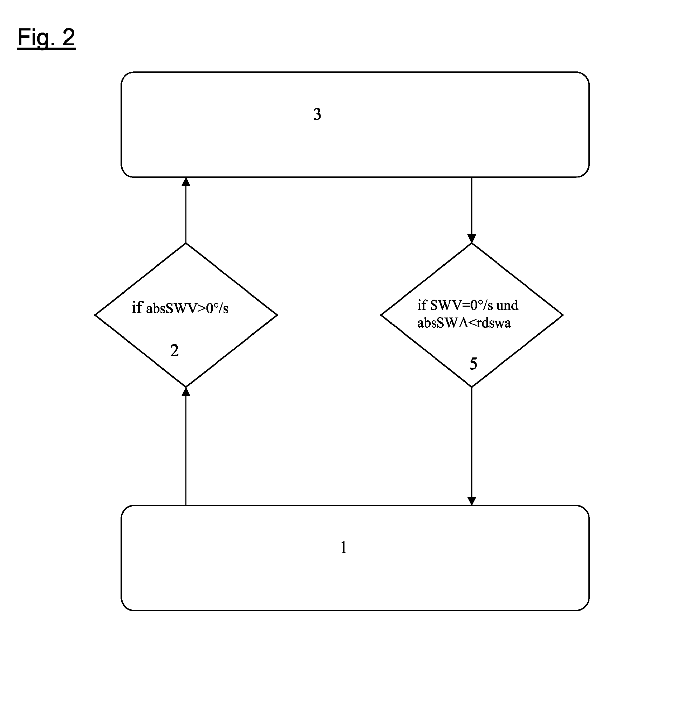

Figur 2 zeigt ein vereinfachtes, beispielhaftes Flußdiagramm zur Steuerung eines Pumpenflusses bzw. einer Pumpendrehzahl einer Pumpe einer Servolenkung über eine Lenkwinkelrate (SWV=Steering Wheel angle velocity) [°/s] und einem Lenkwinkel (SWA=Steering Wheel Angle) [°].

Im Unterschied zu dem Flußdiagramm gemäß Figur 1 wird hierbei eine Abhängigkeit der Lenkwinkelrate SWV und einem absoluten Lenkwinkel SWA gebildet. Wenn der absolute Lenkwinkel SWA kleiner als ein Herunterlauflenkwinkel (rdswa) ist (Bezugszeichen 5), wird das Herunterlaufsignal (ramp down) erzeugt, wenn gleichzeitig SWV=0°/s erfüllt ist. Auch hierbei wird ein Verzögerungs-Abklingfilter (engl.: slow decay filter) verwendet.

Der Herunterlauflenkwinkel rdswa definiert dabei einen Schwellenwert für eine Geradeausfahrt-Position, wobei rdswa ein geschwindigkeitsabhängiger Wert sein kann.

## Patentansprüche

1. Verfahren zur Steuerung einer Pumpendrehzahl einer elektro-hydraulisch unterstützten Servolenkung eines Kraftfahrzeuges,
**gekennzeichnet durch**
eine Aufnahme eines Lenkratensignals und eines Leistungs- bzw. Strombedarfs als unterschiedliche Lenksignale, so daß die Pumpendrehzahl kombiniert zum einen über das Lenkratensignal oder zum anderen über den Leistungs- bzw. Strombedarf gesteuert wird.

2. Verfahren nach Anspruch 1,
**dadurch gekennzeichnet, daß**
die Pumpendrehzahl zunächst mittels des Lenkratensignals gesteuert wird, so daß sich eine Hilfskraft aufbaut und wobei die Pumpendrehzahl bei einem abfallenden oder kleinem Lenkratensignal so lange über den Leistungs- bzw. Strombedarf gesteuert wird, wie der Leistungs- bzw. Strombedarf nicht einer Geradeausfahrt entspricht, so daß die Pumpendrehzahl auf einem ursprünglichen Betrag gehalten wird und die Hilfskraft bestehen bleibt.

3. Verfahren nach Anspruch 1 oder 2,
**dadurch gekennzeichnet, daß**
die Pumpendrehzahl zunächst mittels des Lenkratensignals gesteuert, so daß sich eine Hilfskraft aufbaut, wobei die Pumpendrehzahl bei einem abfallenden oder kleinem Lenkratensignal so lange mittels eines Lenkwinkelsignals gesteuert wird, wie das Lenkwinkelsignal nicht einer Geradeausfahrt entspricht, so daß die Pumpendrehzahl hoch gehalten wird und die Hilfskraft bestehen bleibt.

4. Verfahren nach einem der vorhergehenden Ansprüche,
**dadurch gekennzeichnet, daß**
ein Lenkwinkelschwellenwert definierbar ist, wobei der Lenkwinkelschwellenwert von einer Fahrzeuggeschwindigkeit abhängig sein kann, und eine Geradeausfahrt definiert.

5. Verfahren nach einem der vorhergehenden Ansprüche,
**dadurch gekennzeichnet, daß**
bei Ausfall entweder des Lenkratensignals (Mastersignal) oder des Leistungs- bzw. Strombedarfs bzw. des Lenkwinkelsignals das verbleibende Signal ausgewertet wird, so daß ein Lenkungsausfall verhindert wird.

6. Servolenkung mit einer Pumpe zur Erzeugung einer Hilfskraft, deren Pumpenfluß bzw. -drehzahl insbesondere mit einem Verfahren nach einem der vorhergehenden Ansprüche gesteuert wird, **gekennzeichnet durch**
eine Aufnahme eines Lenkratensignals und eines Leistungs- bzw. Strombedarfs als unterschiedliche Lenksignale, so daß die Pumpendrehzahl kombiniert zum einen über das Lenkratensignal oder zum anderen über den Leistungs- bzw. Strombedarf steuerbar ist
